Europäisches Patentamt

European Patent Office

Office européen des brevets

(11) Veröffentlichungsnummer: **0 056 641**
**A1**

(12) **EUROPÄISCHE PATENTANMELDUNG**

(21) Anmeldenummer: **82100300.1**

(22) Anmeldetag: **16.01.82**

(51) Int. Cl.³: **E 04 G 7/20**
**F 16 L 21/00, F 16 B 7/04**
**F 16 B 2/08**

(30) Priorität: **19.01.81 CH 307/81**

(43) Veröffentlichungstag der Anmeldung:
**28.07.82 Patentblatt 82/30**

(84) Benannte Vertragsstaaten:
**AT DE GB IT**

(71) Anmelder: **GEORG FISCHER AKTIENGESELLSCHAFT**
**Mühlentalstrasse 105**
**CH-8201 Schaffhausen(CH)**

(72) Erfinder: **Szederjei, Eugène, Dipl.-Ing.**
**Dorfstrasse 535**
**CH-8448 Uhwiesen(CH)**

(54) **Einrichtung zum Verbinden von langgestreckten Körpern, insbesondere Rohren.**

(57) Die muffenartige Einrichtung zum Verbinden zweier langgestreckter Körper, insbesondere Rohren (1) besteht aus einem Mittelabschnitt (3) und zwei Endteilen, die mindestens einseitig einen erweiterten Querschnittsbereich (4) aufweisen, in dem eine Schraubvorrichtung (5) angeordnet ist.

Die Schraubvorrichtung (5) besteht aus einer Spreizhülse (8) in die ein kegelstumpfförmiges Element (7) derart einschraubbar ist, dass sich die Spreizhülse (8) beim Drehen einer Schraube (10) erweitert und in die Wandung des Körpers oder Rohres (1) hineingreift.

Beim Verbinden von Rohren (1) ist eine Dichtungsvorrichtung im Mittelabschnitt vorgesehen.

Fig. 1

EP 0 056 641 A1

– 1 –

GEORG FISCHER AKTIENGESELLSCHAFT, 8201 Schaffhausen

2228/FIT / 4.1.1982 / Lg-bs /

## Einrichtung zum Verbinden von langgestreckten Körpern, insbesondere Rohren

Die Erfindung betrifft eine Einrichtung zum Verbinden von langgestreckten Körpern, insbesondere Rohren, mittels einer über die beiden Körperenden angeordneten Muffe mit zwei Endteilen, zwischen welchen sich ein Mittelabschnitt befindet.

Derartige Einrichtungen können zum Verbinden von Stangen, z.B. in Baugerüsten, verwendet werden. Ein weiterer wichtiger Verwendungsbereich ist das Verbinden von Rohren für fliessfähige Medien, wobei in erster Linie an Stahlrohre gedacht ist, obschon auch solche aus Kunststoff in gleicher Weise verbunden werden können.

Stahlrohre wurden bisher fast ausschliesslich miteinander verschraubt. Nachteile dieser Verbindungsart sind vor allem der Zeitaufwand und in den meisten Fällen die mit dem Verbindungsvorgang verbundene Verschiebung der Rohre in ihrer Längsrichtung.

0056641

- 2 -

Ferner besteht ein Nachteil dieser Schraubverbindung darin, dass sie sich teilweise lösen kann. Das ist z.B. der Fall wenn sich das Rohrsystem in einem Lagerhaus befindet, in dem die Güter mit Gabelstapler transportiert werden und sich Sprinkler vom Rohrsystem weg erstrecken. In diesem Falle kann es vorkommen, dass Sprinkler angestossen und dadurch in eine unerwünschte Richtung verdreht werden.

Beim Verbinden von Rohren durch Verschrauben befindet sich die Rohrabdichtung meistens im Gewinde, das beispielsweise mit einer Dichtmasse aus Fasern oder einem flüssigen Klebstoff versehen werden kann.

Bei der hier gesuchten Lösung sind Dichtungsmittel getrennt von den Verbindungsmitteln angeordnet.

Aufgabe der Erfindung ist somit die Schaffung einer Einrichtung zum Verbinden von langgestreckten Körpern, insbesondere Rohren, welche die Nachteile der bestehenden Ausführungen nicht aufweisen.

Dabei soll die Einrichtung schnell herstellbar und drehfest sein, ohne dass eine Verschiebung der Körper in der Längsrichtung der Rohre beim Verbinden auftreten kann.

Diese Aufgabe ist erfindungsgemäss mit der Lehre gemäss dem gekennzeichneten Teil des Anspruches 1 gelöst.

Ausführungsformen dieser Lehre sind in den weiteren, abhängigen Ansprüchen umschrieben.

- 3 -

Die beschriebene Lösung zeichnet sich durch einfache und schnelle Montage aus und erfüllt allen Erfordernissen in Bezug auf Halte- und Torsionsfestigkeit.

Nachfolgend wird ein Ausführungsbeispiel der erfindungsgemässen Einrichtung anhand der Zeichnung näher erläutert.

Es zeigen:

Fig. 1    einen Querschnitt durch eine Verbindungs-Einrichtung gemäss einer ersten Ausführungsform, und

Fig. 2    wie Fig. 1, jedoch gemäss einer zweiten Ausführungsform.

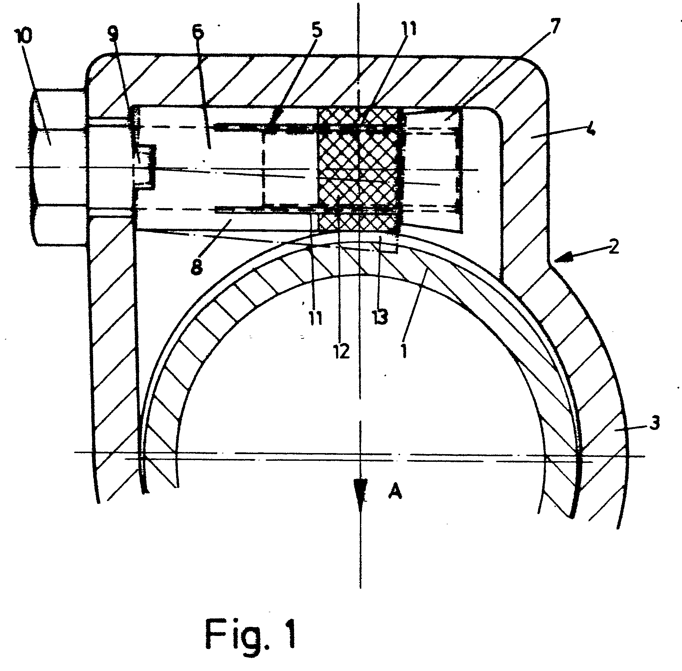

In Fig. 1 ist ein Rohr 1 dargestellt, um das herum ein ringförmiger Körper oder eine Muffe 2 gelegt ist. Der Unterteil, kreisförmige Teil oder Mittelabschnitt 3 der Muffe 2 ist dem Rohrumfang angepasst, während der Oberteil oder Bereich 4 zur Aufnahme einer Befestigungs- oder Schraubvorrichtung 5 ausgebildet ist.

Die Schraubvorrichtung 5 besteht aus einer Schraube 6, die in ein kegelstumpfförmiges Element 7 mit Innengewinde hineingreift. Auf die Schraube 6 ist eine Spreizhülse 8 aufgezogen, die an einem Ende von einem Vorsprung oder Nocken 9 drehfest gehalten wird, während das Element 7 in die Oeffnung am anderen Ende der Spreizhülse 8 hineingreift.

Beim Drehen an einem Schraubkopf 10 wird das Element 7 in die Spreizhülse 8 derart hineingeschraubt, dass sich die aus vier Teilen bestehende Hülsenwandung, radial nach aussen bewegt, indem sich die Spalten 11 erweitern. Durch diesen Vorgang wird die Hülsenwandung bzw. deren einzelne Teile gegen die Rohraussenfläche derart bewegt, dass der aufgerauhte Teil 12 der Spreizhülse 8 in die Hülsenwandung hineingreift. Dieser Eingriff bewirkt, dass das Rohr 1 festgehalten wird.

In der Seitenansicht gesehen ist die Muffe 2 mit zwei Schraubvorrichtungen 5, jeweils eine für die beiden zu verbindenden Rohre 1 versehen, zwischen welchen sich normalerweise zwei, jedoch mindestens eine Abdichtung befindet. In einer Ausführung hat die Muffe 2 einen Mittelabschnitt, der dem Rohrquerschnitt angepasst ist, während sich die beiden Schraubvorrichtungen 5 ausserhalb des Mittelabschnittes an den Muffenenden befindet.

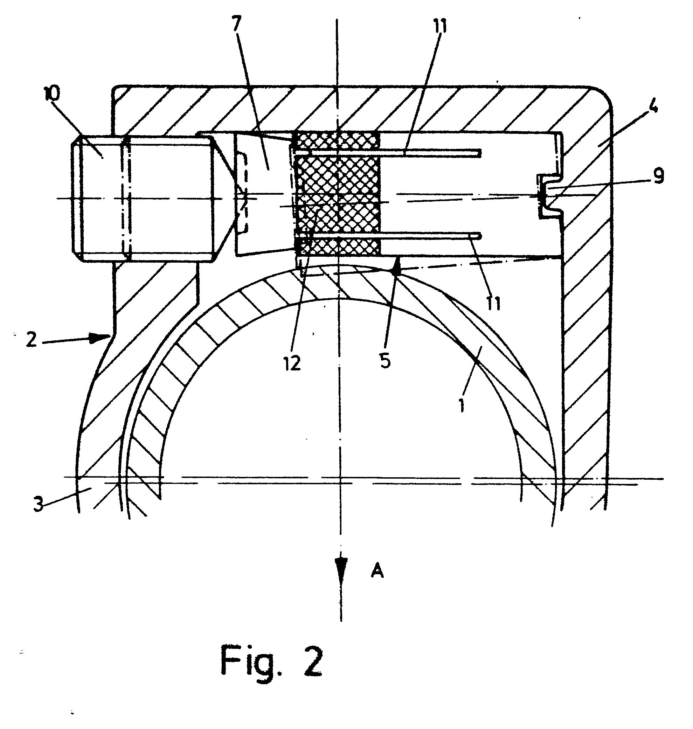

In Fig. 2 ist eine abgewandelte Ausführung der Fig. 1 dargestellt. Dabei kann hier (Fig. 2) das Element 7, z.B. mittels Gewinde in die Spreizhülse 8 eingeschraubt oder einfach hineingedrückt werden, wobei der Schraubenkopf 10 zum Bewegen des Elementes 7 nach innen zur Ausweitung der Spreizhülse 8 dient.

Beim Verbinden der Rohre 1 werden diese in die Richtung des Pfeiles A gedrückt. Dies bedeutet, dass eine ringförmige Dichtung in die gleiche Richtung gepresst wird. Infolgedessen kann es vorkommen, dass die Dichtung an der Stelle 13 nicht ausreichend gut abdichtet.

Diesem Zustand kann dadurch abgeholfen werden, dass auch die Dichtungsrille im Mittelabschnitt in Richtung des Pfeiles A entsprechend versetzt wird.

Dies bedeutet, dass die Rille im Falle von nur einer Schraubvorrichtung, an der von dieser entfernten Stelle in Richtung des Pfeiles A tiefer in die Rohrwandung eingesetzt wird als dort wo sich die Schraubvorrichtung befindet. Diese Versetzung der Rille bzw. der Abstand des Zentrums des Rohres zu demjenigen der Rille kann z.B. der halben Innentoleranz des Rohres entsprechen.

Mit dieser Lösung wird erreicht, dass der Dichtungsdruck um den ganzen Rohrumfang herum etwa gleich bleibt und somit die Rohrabdichtung stark verbessert wird. Somit ist auch an der Umfangsstelle 13 eine zuverlässige Abdichtung gewährleistet.

Zum Trennen der Verbindung genügt es in der Regel die Schraube 6 in umgekehrter Richtung zu drehen, so dass sich der Eingriff zwischen der Spreizhülse 8 und dem Rohr 1 löst.

Die beschriebene Rohrverbindung ist insbesondere für Sprinkleranlagen geeignet, für welche, aus Sicherheitsgründen, normalerweise Stahlrohre verwendet werden. Die einzelnen Muffen können in solchen Fällen mit einem Anschluss zum Einschrauben von Sprinklern versehen werden.

- 6 -

0056641

Anstelle der radial einseitig angeordneten Schraubvorrichtung können zwei solche, jeweils einander
diametral gegenüberliegend, verwendet werden.

<u>P a t e n t a n s p r ü c h e</u>

2228/FIT

1. Einrichtung zum Verbinden von langgestreckten Körpern, insbesondere Rohren, mittels einer über die beiden Körperenden angeordneten Muffe mit zwei Endteilen, zwischen welchen sich ein Mittelabschnitt befindet, dadurch gekennzeichnet, dass der Mittelabschnitt (3) dem äusseren Körperumfang angepasst ist, und dass die Endteile (4) in mindestens einem Bereich zur Aufnahme einer Schraubvorrichtung (5) erweitert sind.

2. Einrichtung nach Anspruch 1, dadurch gekennzeichnet, dass jedes Endteil (4) an zwei einander diametral gegenüberliegenden Bereichen erweitert ist.

3. Einrichtung nach Anspruch 1 oder 2, dadurch gekennzeichnet, dass die Körper Rohre (1) sind, und dass im Mittelabschnitt (3) mindestens eine Dichtung vorhanden ist, die zum Abdichten der beiden Rohrenden dient.

4. Einrichtung nach Anspruch 3, dadurch gekennzeichnet, dass sie eine Dichtung für jedes Rohrende aufweist.

5. Einrichtung nach einem der Ansprüche 1 bis 4, dadurch gekennzeichnet, dass die Schraubvorrichtung (5) eine Spreizhülse (8) aufweist, in die ein kegelstumpfförmiges Element (7) derart einschraubbar ist, dass sich die Spreizhülse (8) erweitert und in das Rohr (1) eingreift.

6. Einrichtung nach Anspruch 5, dadurch gekennzeichnet, dass ein Nocken (9) zur drehfesten Halterung der Spreizhülse (8) auf der Innenfläche der Muffe (2) angeordnet ist.

7. Einrichtung nach Anspruch 3 oder 4, dadurch gekennzeichnet, dass die Dichtungen in einer Rille in der Innenwandung des Mittelabschnittes (3) angeordnet sind.

8. Einrichtung nach Anspruch 7, mit einem Bereich, dadurch gekennzeichnet, dass die Rille kreisförmig ist, und dass deren Zentrum zum Rohrzentrum um einen Abstand versetzt ist.

9. Einrichtung nach Anspruch 8, dadurch gekennzeichnet, dass der Abstand der halben Innentolerenz des Rohres entspricht.

0056641

1/2

Fig. 1

2228 / FIT

Fig. 2

**Europäisches Patentamt**

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| **Kategorie** | **Kennzeichnung des Dokuments mit Angabe, soweit erforderlich, der maßgeblichen Teile** | **betrifft Anspruch** | |
| X | US - A - 3 905 623 (CASSEL) <br><br> * Spalte 1, Zeilen 18-21; Figuren 1,2 * <br><br> -- | 1,2,5 | E 04 G 7/20 <br> F 16 L 21/00 <br> F 16 B 7/04 <br> F 16 B 2/08 |
| X | US - A - 1 785 870 (MARLES) <br><br> * Figuren 1-5 * <br><br> -- | 1,2,5, 7-9 | |
| A | FR - A - 2 383 343 (HENNING) | | **RECHERCHIERTE SACHGEBIETE (Int Cl.³)** |
| A | DE - C - 970 877 (COURTOIT) <br><br><br><br> ---------- | | F 16 L <br> F 16 B <br> E 04 G |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 16-04-1982 | ANGIUS |

EPA form 1503.1   06.78